(19) Europäisches Patentamt

European Patent Office

Office européen des brevets

(11) **EP 2 220 643 B1**

(12) **EUROPÄISCHE PATENTSCHRIFT**

(45) Veröffentlichungstag und Bekanntmachung des Hinweises auf die Patenterteilung:
**21.09.2016 Patentblatt 2016/38**

(21) Anmeldenummer: **08850422.0**

(22) Anmeldetag: **04.11.2008**

(51) Int Cl.:
***G09G 3/20*** (2006.01)

(86) Internationale Anmeldenummer:
**PCT/EP2008/064896**

(87) Internationale Veröffentlichungsnummer:
**WO 2009/062855 (22.05.2009 Gazette 2009/21)**

(54) **DOKUMENT MIT EINER INTEGRIERTEN ANZEIGEVORRICHTUNG**

DOCUMENT COMPRISING AN INTEGRATED DISPLAY DEVICE

DOCUMENT À DISPOSITIF D'AFFICHAGE INTÉGRÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.11.2007 DE 102007000888**

(43) Veröffentlichungstag der Anmeldung:
**25.08.2010 Patentblatt 2010/34**

(73) Patentinhaber: **Bundesdruckerei GmbH**
**10958 Berlin (DE)**

(72) Erfinder:
• **MATHEA, Arthur**
**14199 Berlin (DE)**
• **FISCHER, Jörg**
**13053 Berlin (DE)**
• **PAESCHKE, Manfred**
**16348 Wandlitz (DE)**
• **PFLUGHOEFFT, Malte**
**13347 Berlin (DE)**
• **MUTH, Oliver**
**12277 Berlin (DE)**

(74) Vertreter: **Richardt Patentanwälte PartG mbB**
**Wilhelmstraße 7**
**65185 Wiesbaden (DE)**

(56) Entgegenhaltungen:
**EP-A- 1 094 435          WO-A-99/08910**
**US-A1- 2003 231 150**

**Beschreibung**

Die vorliegende Erfindung betrifft ein Dokument mit einer integrierten Anzeigevorrichtung, insbesondere ein Wert- oder Sicherheitsdokument, ein Lesegerät sowie ein Verfahren zur Verifikation eines Dokuments.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als sogenannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 7816, ISO 14443, ISO 15763 festgelegt.

Ein Nachteil solcher Dokumente mit RFID-Funktionalität ist, dass ohne Einverständnis des Trägers des Dokuments die RFID-Schnittstelle angesprochen werden kann. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO). Ein Verfahren für den besonderen Schutz biometrischer Daten, d.h. die sog. Extended Access Control, ist beispielsweise aus der oben bereits genannten DE 10 2005 025 806 bekannt.

Aus der zum Anmeldezeitpunkt unveröffentlichten Patentanmeldung DE 10 2006 031 422.0-53 derselben Anmelderin ist ein Wert- oder Sicherheitsdokument mit einer Anzeigevorrichtung zur Ausgabe eines maschinenlesbaren optischen Signals, welches durch einen Benutzer nicht kognitiv erfassbar ist, bekannt.

Aus WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist. Weitere elektronische Kraftfahrzeug-Kennzeichen sind bekannt aus US 5,657,008 und US 2007/0285361 A1. Und ebenso aus der WO 99/08910 A1, die sich mit einer Anzeigevorrichtung für ein Kraftfahrzeug, die aus einer organischen LED-Anzeige besteht, befasst.

Aus der US 2003/231150 A1 ist eine Anzeigevorrichtung bekannt, die eine Vielzahl von Pixeln aufweist, die aus einem organischen elektrolumineszenten Material bestehen. Dabei werden für die Pixel sowohl phosphoreszierende als auch fluoreszierende Materialien verwendet, die sich in ihrem Emissionsverhalten unterscheiden. Durch die Verwendung von beiden Materialien kann eine hohe Leuchtkraft des Displays erreicht werden. Um die unterschiedlichen Lebensdauern der fluoreszierenden und der phosphoreszierenden Materialien zu kompensieren, ist eine zeitlich verzögerte Ansteuerung der fluoreszierenden und der phosphoreszierenden Pixel vorgesehen, so dass die Differenzen ausgeglichen werden.

Die EP 1 094 435 A1 befasst sich mit einer Vorrichtung zur Ansteuerung eines Plasmadisplays. Jedem Pixel des Displays sind drei Leuchtstoffzeilen zugeordnet, wobei die erste Zeile eine rote, die zweite Zeile eine grüne und die dritte Zeile eine blaue Leuchtstoffschicht aufweist. Mittels einer Ansteuerelektronik wird jeweils eine Ansteuerspannung für die Elektroden der Zeilen erzeugt. Da die Leuchtstoffe unterschiedliche Ansprechzeiten haben, werden die Ansteuerspannungen relativ zueinander zeitlich verzögert.

Der Erfindung liegt dem gegenüber die Aufgabe zu Grunde, ein verbessertes Dokument, ein Lesegerät für ein Dokument und ein Verfahren zur Verifikation eines Dokuments zu schaffen.

Die der Erfindung zu Grunde liegenden Aufgaben werden jeweils mit den Merkmalen der unabhängigen Patentansprüche 1 und 10 gelöst. Ausführungsformen der Erfindung sind in den abhängigen Patentansprüchen angegeben.

Nach Ausführungsformen der Erfindung wird ein Dokument mit einer integrierten Anzeigevorrichtung geschaffen, die mehrere ansteuerbare Anzeigeelemente aufweist. Jedes der Anzeigeelemente ist zur Abgabe eines optischen Signals ausgebildet, sodass in einem Speicher des Dokuments gespeicherte Bilddaten auf der Anzeigevorrichtung zur visuellen Erfassung durch einen Benutzer wiedergegeben werden können. Die Ansteuerung der Anzeigeelemente erfolgt zyklisch wiederholend mit einer bestimmten Bildwiederholfrequenz von beispielsweise 25 Hz oder 50 Hz. Mit jeder Bildwiederholung wird jedes der Anzeigeelemente angesteuert, um ein optisches Signal auszugeben, welches zu der Wiedergabe der gespeicherten Daten beiträgt. Durch jedes der Anzeigeelemente wird also beispielsweise ein so genannter Pixel oder Subpixel realisiert.

Bei einer Teilmenge der Anzeigevorrichtung erfolgt die Abgabe der optischen Signale innerhalb der Bildwiederholperiode mit einer zeitlichen Verzögerung, wobei die zeitliche Verzögerung so kurz ist, dass sie visuell nicht wahrnehmbar ist. Insbesondere ist also die zeitliche Verzögerung wesentlich kürzer als die Länge einer Bildwiederholperiode und auch wesentlich kürzer als die Länge einer Zeilenansteuerungsperiode. Der visuelle Eindruck der Wiedergabe der in dem Dokument gespeicherten Daten ändert sich durch die zeitliche Verzögerung also nicht.

Die zeitliche Verzögerung der Abgabe der optischen Signale von einer Teilmenge der Anzeigeelemente hat insbesondere den Vorteil, dass damit die Nachstellung eines erfindungsgemäßen Dokuments erschwert wird. Zunächst erhält der Fälscher keine Kenntnis von der Tatsache, dass die Abgabe der optischen Signale von der Teilmenge der Anzeigeelemente mit einer Verzögerung erfolgt, da diese Verzögerung ja visuell mit dem bloßen Auge nicht wahrnehmbar ist.

Ferner kann sich die Verzögerung der Abgabe der optischen Signale auf nur einen Teilbereich des Dokuments beziehen, wodurch eine Nachstellung des Dokuments weiter erschwert wird, da ein Fälscher ja auch nicht wissen kann, wo sich dieser Teilbereich des Dokuments befinden soll.

Nach einer Ausführungsform der Erfindung ist in der Länge der zeitlichen Verzögerung eine Information codiert. Beispielsweise erfolgt in einer ersten Bildwiederholperiode die Wiedergabe der Daten für alle Anzeigeelemente ohne eine zeitliche Verzögerung. Dies entspricht beispielsweise einer logischen Null. In einer nachfolgenden zweiten Bildwiederholperiode erfolgt die Wiedergabe der Daten durch alle Anzeigeelemente mit einer zeitlichen Verzögerung, wodurch eine logische Eins repräsentiert ist.

Alternativ erfolgt in einer bestimmten Bildwiederholperiode die Abgabe der optischen Signale nur einer Teilmenge der Anzeigeelemente mit einer zeitlichen Verzögerung, die für sämtliche Anzeigeelemente der Teilmenge identisch ist, wohingegen die Abgabe der optischen Signale durch die übrigen Anzeigeelemente der Anzeigevorrichtung, die nicht zu der Teilmenge gehören, ohne oder mit einer von dieser Teilmenge verschiedenen zeitliche Verzögerung erfolgt. Aufgrund der Tatsache, dass hinsichtlich der Teilmenge der Anzeigeelemente eine zeitliche Verzögerung bei der Abgabe von deren optischen Signalen vorliegt, ist ein Sicherheitsmerkmal des Dokuments gegeben.

Nach einer Ausführungsform der Erfindung ist in der räumlichen Anordnung der Anzeigeelemente der Teilmenge eine Information codiert. Beispielsweise bilden die Anzeigeelemente der Teilmenge durch deren räumliche Anordnung ein bestimmtes Muster auf der Anzeigevorrichtung. Durch dieses Muster kann wiederum ein Sicherheitsmerkmal gegeben sein.

Nach einer Ausführungsform der Erfindung hat das Dokument Mittel zur Verzögerung der Ansteuerung der zu der Teilmenge gehörenden Anzeigeelemente. Beispielsweise sind die Mittel zur Verzögerung der Ansteuerung auf der Ebene der Treiberlogik realisiert.

Nach einer Ausführungsform der Erfindung handelt es sich bei der Anzeigevorrichtung um ein Aktiv-Matrix-Display, wobei jedem der Anzeigeelemente eine Aktivierungsschaltung zugeordnet ist. Bei dieser Ausführungsform können die Mittel zur Verzögerung der Ansteuerung auf der Ebene der Aktivierungsschaltungen realisiert sein.

Nach einer Ausführungsform der Erfindung dienen Zeilenleitungen und/oder Spaltenleitungen zur Ansteuerung der Anzeigeelemente. Bei dieser Ausführungsform können die Mittel zur Verzögerung der Ansteuerung auf der Ebene der Zeilenleitungen und/oder der Spaltenleitungen realisiert sein.

Nach einer Ausführungsform der Erfindung haben die Anzeigeelemente der Teilmenge eine Ansprechcharakteristik, die zu der Verzögerung führt. Sämtliche der Anzeigeelemente der Anzeigevorrichtung, einschließlich der zu der Teilmenge gehörenden Anzeigeelemente, werden auf die gleiche Art und Weise innerhalb einer Bildwiederholperiode angesteuert. Die zeitliche Verzögerung der Abgabe der optischen Signale von den Anzeigeelementen der Teilmenge ist hier durch die Ansprechcharakteristik der zu der Teilmenge gehörenden Anzeigeelemente begründet, welche von der Ansprechcharakteristik der Anzeigeelemente, die nicht zu der Teilmenge gehören, abweicht.

Diese abweichende Ansprechcharakteristik kann zum Beispiel dadurch bedingt sein, dass die Anzeigeelemente der Teilmenge einen anderen Leuchtstoff aufweisen als die Anzeigeelemente, die nicht zu der Teilmenge gehören. Beispielsweise kann für die Anzeigeelemente der Teilmenge ein Leuchtstoff verwendet werden, der eine etwas längere Nachleuchtzeitdauer und damit auch ein verzögertes Ansprechverhalten im Vergleich zu dem für die übrigen Anzeigeelemente verwendeten Leuchtstoff aufweist. Bei der Teilmenge kann es sich zum Beispiel um die Menge aller zu einer Farbe gehörenden Subpixel handeln.

Nach einer Ausführungsform der Erfindung haben alle Anzeigeelemente der Anzeigevorrichtung oder alle Anzeigeelemente der Anzeigevorrichtung, welche zur Darstellung einer bestimmten Farbe, zum Beispiel rot, verwendet werden, denselben Leuchtstoff, wie zum Beispiel Europium-dotierte Verbindungen. Bei dieser Ausführungsform ergibt sich die abweichende Ansprechcharakteristik der Anzeigeelemente der Teilmenge dadurch, dass diese Anzeigeelemente einen anderen Wirtskristall für den Leuchtstoff aufweisen als die übrigen Anzeigeelemente. In einer weiteren Ausführungsform umfasst die Teilmenge mit der besonderen Ansprechcharakteristik diejenigen Anzeigelemente, welche zur Darstellung einer bestimmten Farbe verwendet wird. Hierdurch wird das Dokument gegen Austausch der Anzeigevorrichtung durch eine handelsübliche Anzeigevorrichtung abgesichert.

Eine weitere erfindungsgemäße Ausführung sieht vor, dass zusätzlich zur der charakteristischen Ansprech- und/oder Abklingcharakteristika die spektrale Charakteristik zur Authentifikation genutzt wird. Zum Beispiel weisen die oben genannten Europium-dotierte Verbindungen nicht nur unterschiedliche Lebensdauern auf, sondern unterscheiden sich auch in der exakten Lage beziehungsweise den Intensitätsverhältnissen der Emissionslinien.

Nach einer Ausführungsform der Erfindung handelt es sich bei der in das Dokument integrierten Anzeigevorrichtung um ein Aktiv- oder Passiv-Matrixdisplay oder eine Segment-Anzeige.

Insbesondere kann es sich bei der Anzeigevorrichtung um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala ([www.citala.com](www.citala.com)) kommerziell erhältlich ist (vergleiche US 2006/0250535 A1 und WO 2007/054944), handeln.

Die in dem Dokument gespeicherten Daten können verschiedene Inhalte beinhalten, die zur Erzeugung einer Bildwiedergabe auf der Anzeigevorrichtung geeignet sind, das heißt, beispielsweise digitale Bildaufnahmen, insbesondere Gesichtsbilder einer Person, Wappen, Siegel, textuelle Angaben, Barcodes, ein Kennzeichen, insbesondere ein Kraftfahrzeugkennzeichen, und dergleichen.

Nach einer Ausführungsform der Erfindung handelt es sich bei der Information, die durch die Verzögerung der Abgabe der optischen Signale von den Anzeigeelementen der Teilmenge ausgegeben wird, um eine Personalisierungsinformation, ein Sicherheitsmerkmal und/oder einen kryptographischen Schlüssel.

Bei den Personalisierungsinformationen kann es sich beispielsweise um Angaben bezüglich des Trägers des Dokuments handeln, wie zum Beispiel dessen Namen, Wohnort, Größe, Alter, Geschlecht, Gewicht und dergleichen. Diese Angaben können bei der Wiedergabe der gespeicherten Daten ganz oder teilweise im Klartext auf der Anzeigevorrichtung angezeigt werden.

Nach einer Ausführungsform der Erfindung handelt es sich bei der Information um ein Sicherheitsmerkmal, wie zum Beispiel ein Wappen, Siegel oder dergleichen. Diese Information wird zum Beispiel durch die räumliche Anordnung der Bildelemente der Teilmenge ausgegeben.

Nach einer Ausführungsform der Erfindung handelt es sich bei der Information um einen kryptographischen Schlüssel. Bei dem kryptographischen Schlüssel kann es sich um einen symmetrischen oder um einen asymmetrischen Schlüssel handeln. Der kryptographische Schlüssel wird von einem Lesegerät erfasst, so dass das Lesegerät zusammen mit dem Dokument ein kryptographisches Protokoll ausführen kann.

Nach einer Ausführungsform der Erfindung handelt es sich bei der Information um einen Fahrzeugparameter und/oder einen Gebührenstatus des Kraftfahrzeugs. Das Dokument, insbesondere in der Ausführungsform als elektronisches Kraftfahrzeugkennzeichen, kann an dem Kraftfahrzeug oder einem Kraftfahrzeugteil befestigt sein.

Bei dem Fahrzeugparameter kann es sich z.B. um die Geschwindigkeit des Kraftfahrzeugs, einen Lärmpegel oder einen Abgaswert handeln. Insbesondere kann durch die Information ausgegeben werden, welche Schadstoffklasse das Kraftfahrzeug erfüllt, insbesondere gemäß der anwendbaren Feinstaubverordnung.

Durch die Ausgabe des Gebührenstatus kann angezeigt werden, ob für das Kraftfahrzeug die vorgeschriebenen Gebühren, Steuern und/oder Abgaben, insbesondere Mautgebühren, Kraftfahrzeugsteuern und/oder Abgasgebühren, bezahlt worden sind.

Nach einer Ausführungsform der Erfindung hat das Dokument einen geschützten Speicherbereich, in dem weitere Daten gespeichert sind. Ferner hat das Dokument eine Schnittstelle für einen lesenden Zugriff des Lesegeräts auf diese weitere Daten. Die Schnittstelle kann kontaktbehaftet oder kontaktlos, insbesondere als RFID-Schnittstelle ausgebildet sein. Ferner kann die Schnittstelle auch als so genanntes Dual Mode Interface ausgebildet sind. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Bedingung für einen Lesezugriff des Lesegeräts auf die weiteren Daten ist die zuvorige erfolgreiche Ausführung des kryptographischen Protokolls. Bei dem kryptographischen Protokoll kann es sich zum Beispiel um eine sogenannte Challenge-Response Verfahren handeln. Durch das kryptographische Protokoll werden die weiteren Daten gegen unerlaubte Zugriffe geschützt. Dies ist besonders vorteilhaft, wenn es sich bei den dritten Daten um sensitive Daten handelt, wie zum Beispiel biometrische Daten, insbesondere Fingerabdruckdaten oder Iris-Scandaten des Trägers des Dokuments.

Unter einem "Dokument" werden erfindungsgemäß unter anderem Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Firmenausweise, Gesundheitskarten oder andere ID-Dokumente, sowie auch Chipkarten, Zahlungsmittel, insbesondere Bankkarten und Kreditkarten, Frachtbriefe oder sonstige Berechtigungsnachweise.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das sog. Frontend oder Backend integriert sein, indem dort ein Display erfindungsgemäß eingebracht oder aufgebracht wird.

Das Dokument kann auch metallbasiert sein, insbesondere blechbasiert; es kann also einen Dokumentenkörper aus Blech haben. Es kann aber auch ein Dokumentenkörper aus einem anderen Material haben, wie z.B. aus einem Verbundmaterial, wie er im Fahrzeugbau verwendet wird.

In einem weiteren Aspekt betrifft die Erfindung ein Lesegerät für ein Dokument. Das Lesegerät hat einen Sensor zur Erfassung der Verzögerungen des von der Anzeigevorrichtung abgestrahlten Lichts sowie Decodiermittel zur Decodierung der über die Verzögerungen codierten Information.

Nach einer Ausführungsform der Erfindung ist das Lesegerät zur Verifikation des Dokuments mit Hilfe der Information ausgebildet. Beispielsweise vergleicht das Lesegerät die empfangene Information mit einer Referenz-Information. Eine hinreichende Übereinstimmung zwischen der empfangenen Information und der Referenzinformation ist eine Voraussetzung dafür, dass das Dokument als echt anerkannt wird.

Nach einer Ausführungsform der Erfindung hat das Lesegerät Mittel zur Ausführung des kryptographischen Protokolls mittels der empfangenen Information. Bei dieser Information handelt es sich beispielsweise um einen kryptographischen Schlüssel. Aufgrund der Erfassung des kryptographischen Schlüssels kann das Lesegerät mit dem Dokument das kryptographische Protokoll ausführen. Nach erfolgreicher Durchführung des kryptographischen Protokolls kann das Lesegerät auf einen geschützten Speicherbereich des Dokuments zugreifen, um von dort Daten auszulesen.

Nach einer Ausführungsform der Erfindung ist das Lesegerät zur Erfassung des Dokuments eines vorbeifahrenden Transportmittels ausgebildet; bei dieser Ausführungsform ist das Dokument beispielsweise als elektronisches Kraftfahrzeugkennzeichen ausgebildet. Das Lesegerät kann z.B. zur Erfassung eines Fahrzeugparameters, eines Fahrparameters oder eines Gebührenstatus des Kraftfahrzeugs dienen, insbesondere zur Durchführung von Verkehrskontrollen, Abgaskontrollen und/oder Gebührenkontrollen.

In einem weiteren Aspekt betrifft die Erfindung ein Verfahren zur Verifikation eines Dokuments. Zur Verifikation des Dokuments wird die von der Anzeigevorrichtung empfangene Information mit einer Referenzinformation verglichen. Neben der von der Anzeigevorrichtung erfaßten zeitlichen Verzögerung kann auch die erfasste spektrale Charakteristik der Strahlungskomponenten zur Verifikation verwendet werden.

Im Weiteren werden Ausführungsformen der Erfindung mit Bezugnahme auf die Zeichnungen näher erläutert. Es zeigen:

Figur 1      ein Blockdiagramm einer Ausführungsform eines erfindungsgemäßen Dokuments,

Figur 2      ein Blockdiagramm einer Ausführungsform einer erfindungsgemäßen Anzeigevorrichtung,

Figur 3     die zeitaufgelösten Intensitätsprofile verschiedener Sorten von Anzeigeelementen,

Figur 4     ein Signaldiagramm zur Darstellung der Zeilenansteuerungen innerhalb einer Bildwiederholperiode,

Figur 5     ein Signaldiagramm zur Darstellung einer Zeilenansteuerung von Anzeigeelementen mit und ohne zeitliche Verzögerung,

Figur 6     ein Blockdiagramm einer weiteren Ausführungsform eines erfindungsgemäßen Dokuments.

Elemente der nachfolgenden Ausführungsformen, die einander entsprechen, sind mit denselben Bezugszeichen gekennzeichnet.

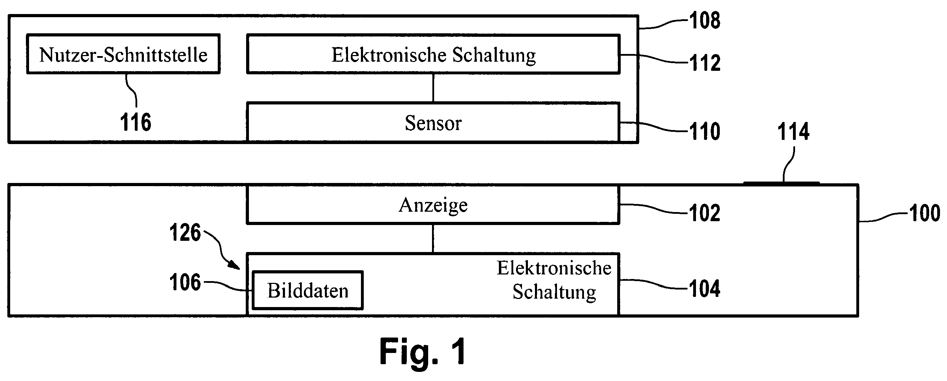

Die Figur 1 zeigt ein Dokument 100 mit einer in den Dokumentenkörper des Dokuments 100 integrierten Anzeige 102 und einer elektronischen Schaltung 104 zur Ansteuerung der Anzeige 102. Die Anzeige 102 beinhaltet eine Vielzahl von Anzeigeelementen, die beispielsweise matrixförmig angeordnet sein können. Insbesondere kann es sich bei der Anzeige 102 um eine Passiv- oder eine Aktiv-Matrixanzeige handeln.

Die elektronische Schaltung 104 beinhaltet einen oder mehrere elektronische Speicher 126 zur Speicherung insbesondere von Daten 106. Die elektronische Schaltung 104 kann auf die Daten 106 zugreifen. Insbesondere dient die elektronische Schaltung 104 zum Zugriff auf die Daten 106, um die Anzeige 102 zur Wiedergabe der Daten 106 anzusteuern, sodass ein Benutzer des Dokuments 100 die Wiedergabe der Daten 106 visuell wahrnehmen kann.

Bei den Daten 106 kann es sich zum Beispiel um Bilddaten handeln. Unter "Bilddaten" werden hier Daten verstanden, die sich zur Wiedergabe auf der Anzeige 102 eignen, d.h. zum Beispiel eine digitale Fotografie, textuelle Angaben, ein Kennzeichen, insbesondere ein Kraftfahrzeugkennzeichen, ein ein- oder zweidimensionaler Barcode oder dergleichen.

Die elektronische Schaltung 104 ist so ausgebildet, dass während einer Bildwiederholperiode sämtliche der Anzeigeelemente der Anzeige 102 einmal angesteuert werden, um so die Daten 106 auf der Anzeige 102 wiederzugeben. Dies kann mit einer Bildwiederholfrequenz von zum Beispiel 25 Hz oder 50 Hz erfolgen.

Ein jedes der Anzeigeelemente der Anzeige 102 ist zur Abgabe eines optischen Signals ausgebildet. Durch Ansteuerung der Anzeigeelemente durch die elektronische Schaltung 104 werden die in dem Dokument gespeicherten Daten 106 wiedergegeben, sodass sie ein Benutzer visuell wahrnehmen kann. Dies erfolgt beispielsweise so, dass innerhalb einer Bildwiederholperiode die Anzeigeelemente zeilenweise angesteuert werden, um so innerhalb einer Bildwiederholperiode ein Vollbild auf der Anzeige 102 aufzubauen.

Die Anzeige 102 ist so ausgebildet, dass die Abgabe der optischen Signale von einer Teilmenge ihrer Anzeigeelemente für den Aufbau des Vollbildes innerhalb einer Bildwiederholperiode mit einer zeitlichen Verzögerung erfolgt. Über die Länge der zeitlichen Verzögerung und/oder die räumliche Anordnung der Anzeigeelemente dieser Teilmenge auf der Anzeige 102 kann eine Information in der Anzeige 102 codiert sein.

Das Lesegerät 108 hat einen optischen Sensor 110, wie zum Beispiel einen CCD-Sensor oder einen optischen Scanner. Der Sensor 110 ist dazu ausgebildet, die von den Anzeigeelementen der Anzeige 102 abgegebenen optischen Signale zu erfassen.

Der Sensor 110 kann in einer anderen erfindungsgemäßen Ausführungsform aus einem Halbleiterdetektor, zum Beispiel Phototransistor, Photodiode (insbesondere Avalanche-Photodiode) oder Photowiderstand, oder einem Sekundärelektronenvervielfacher (Photomultiplier, PMT) bestehen, welcher die zeitaufgelöste Detektion ermöglicht. Ein weiterer Bestandteil des Sensors 110 kann einen Filter, ein dispersives Element (zum Beispiel Prisma) und/oder diffraktives Element (zum Beispiel Gitter) beinhalten, um einen spektralen Bereich zu selektieren. Zum Beispiel kann im oben genannten Beispiel für Europium-haltige Leuchtstoffe ein sogenannter Langpassfilter eingesetzt werden, welcher nur Licht mit Wellenlängen zum Beispiel größer 600 nm durchlässt, welches dann zum Beispiel von einer Photodiode zeitaufgelöst detektiert wird.

Der Sensor 110 kann zum Beispiel auf die Detektion von UV-, sichtbaren und/oder IR-Licht ausgebildet sein. Das detektierte Licht kann in einer Ausführungsform von der Anzeigevorrichtung emittiert worden sein. In einer weiteren Ausführungsform verfügt das Lesegerät über eine Beleuchtungsquelle, welche das Dokument bestrahlt. Das Dokument kann diese Strahlung in unveränderter oder veränderter Form wieder abgeben. Der Sensor kann somit die Transmission, Emission oder Reflexion messtechnisch erfassen. Bei der Beleuchtungsquelle kann es sich um einen thermischen Emitter (zum Beispiel Glühlampe, Nernst-Stift), eine LED (anorganisch, organisch oder Hybrid), einen Laser, eine Gasentladungslampe (zum Beispiel Kaltkathodenlampe, Natriumdampflampe) oder eine Kombination dieser handeln. Diese können mit einem Filter, einem dispersiven Element (zum Beispiel Prisma) und/oder diffraktiven Element (zum Beispiel Gitter) versehen sein, um einen spektralen Bereich zu selektieren. Bevorzugt sind einzelne Wellenlängen, Wellenlängenbereiche oder kontinuierliche Spektren zwischen 190 nm und 2500 nm, bevorzugt zwischen 250 nm und 1250 nm.

Das Lesegerät 108 kann eine Beleuchtungsquelle aufweisen. Bei der Beleuchtungsquelle kann es sich beispielsweise um einen thermische Emitter, insbesondere Glühlampe, Nernst-Stift, eine LED, insbesondere anorganisch, organisch oder Hybrid LED, einen Laser, eine Gasentladungslampe, insbesondere Kaltkathodenlampe, Natriumdampflampe oder eine Kombination hieraus handeln.

Der Sensor 110 ist mit einer elektronischen Schaltung 112 des Lesegeräts 108 verbunden. Durch die elektronische Schaltung 112 werden die durch den Sensor 110 erfassten optischen Signale ausgewertet, um die zeitliche Verzögerung zu erfassen, mit der die Anzeigeelemente der Teilmenge die optischen Signale abgeben. Die elektronische Schaltung 112 kann einen Decoder beinhalten, um die Information aus den zeitlichen Verzögerungen und/oder aus der Anordnung der Anzeigeelemente der Teilmenge, die die zeitlich verzögerten optischen Signale abgegeben haben, zu decodieren. In der elektronischen Schaltung 112 kann eine Referenz-Information gespeichert sein.

In einer Ausführungsform führt die elektronische Schaltung 112 die Anpassung einer Exponentialfunktion an den vom Sensor 110 gemessenes zeitaufgelöstes Intensitätsprofil für den Einschaltvorgang und/oder den Ausschaltvorgang durch, um die zeitliche Verzögerung zu detektieren. Die unterschiedlichen zeitlichen Verzögerungen sind hier durch den verschieden steilen Anstieg bzw. Abfall der Strahlungsintensität der Anzeigeelemente beim Einschalten bzw. Ausschalten gegeben.

Ferner hat das Lesegerät 108 eine Nutzerschnittstelle 116. Alternativ oder zusätzlich kann das Lesegerät 108 auch eine Schnittstelle zu einem Computer und/oder einem Netzwerk aufweisen.

Das Lesegerät 108 kann mit einem Sensor 110 die Wiedergabe der Anzeige 102 erfassen. Dies kann permanent erfolgen, sodass das Lesegerät 108 also ständig die von der Anzeigevorrichtung 102 erzeugte Wiedergabe optisch sensiert. Hierzu ist der Sensor 110 beispielsweise als Hochgeschwindigkeitskamera ausgebildet.

Beispielsweise handelt es sich bei der erfassten Information um eine Personalisierungsinformation. Diese Personalisierungsinformation kann auf dem Dokument 100 als Aufdruck 114 im Klartext angegeben sein. Durch Vergleich der über die Nutzerschnittstelle 116 ausgegebenen Personalisierungsinformation mit der auf dem Aufdruck 114 des Dokuments 100 angegebenen Personalisierungsinformationen kann also eine Prüfung der Echtheit des Dokuments erfolgen, da die aus der zeitlichen Verzögerung der von den Anzeigeelementen der Teilmenge optisch von dem Sensor 110 erfassten Personalisierungsinformation, die über die Schnittstelle 116 des Lesegeräts 108 ausgegeben wird, mit der auf dem Aufdruck 114 gezeigten Personalisierungsinformation übereinstimmen muss.

Bei der Information kann es sich auch um ein Wappen, Siegel oder ein anderes Sicherheitsmerkmal handeln. Die Wiedergabe dieses Sicherheitsmerkmals wird von dem Sensor 110 des Lesegeräts 108 erfasst und durch die elektronische Schaltung 112 mit der dort gespeicherten Referenz-Information verglichen. Wenn das optisch erfasste Sicherheitsmerkmal mit der Referenz-Information hinreichend übereinstimmt, wird über die Nutzerschnittstelle 116 ein akustisches oder optisches Signal ausgegeben, welches anzeigt, ob das Dokument 100 die Echtheitsprüfung bestanden hat oder nicht.

Beispielsweise geben alle Anzeigeelemente der Teilmenge deren jeweiligen optischen Signale innerhalb einer Bildwiederholperiode mit derselben zeitlichen Verzögerung ab. In diesem Fall kann durch die räumliche Anordnung der Anzeigeelemente der Teilmenge auf der Anzeige 102 das Sicherheitsmerkmal gebildet werden.

Die elektronische Schaltung 104 kann auch so ausgebildet sein, dass sie unmittelbar vor einer Bildwiederholperiode ein Trigger-Signal abgibt, welches beispielsweise drahtlos oder optisch zu der elektronischen Schaltung 112 des Lesegeräts 108 übertragen wird. Erst aufgrund dieses Trigger-Signals startet die elektronische Schaltung 112 die optische Erfassung der Wiedergabe der Anzeige 102 mit Hilfe des Sensors 110, um die von den Anzeigeelementen der Anzeige 102 während der nachfolgenden Bildwiederholperiode abgegebenen optischen Signale zu erfassen. Der Sensor 110 kann bei dieser Ausführungsform beispielsweise als time-gated Sensor ausgebildet sein, insbesondere als time-gated CCD-Kamera.

Alternativ kann das Lesegerät 108 so ausgebildet sein, dass es dieses Trigger-Signal für das Dokument 100 erzeugt. In diesem Fall wird das Trigger-Signal beispielsweise drahtlos von der elektronischen Schaltung 112 an die elektronische Schaltung 104 übertragen. Daraufhin wird von der elektronischen Schaltung 104 eine Bildwiederholperiode gestartet, innerhalb derer ein Vollbild zur Wiedergabe der Daten 106 aufgebaut wird. Ferner wird durch das Trigger-Signal in dem Lesegerät 108 von der elektronischen Schaltung 112 die optische Erfassung der Wiedergabe der Anzeige 102 durch den Sensor 110 gestartet.

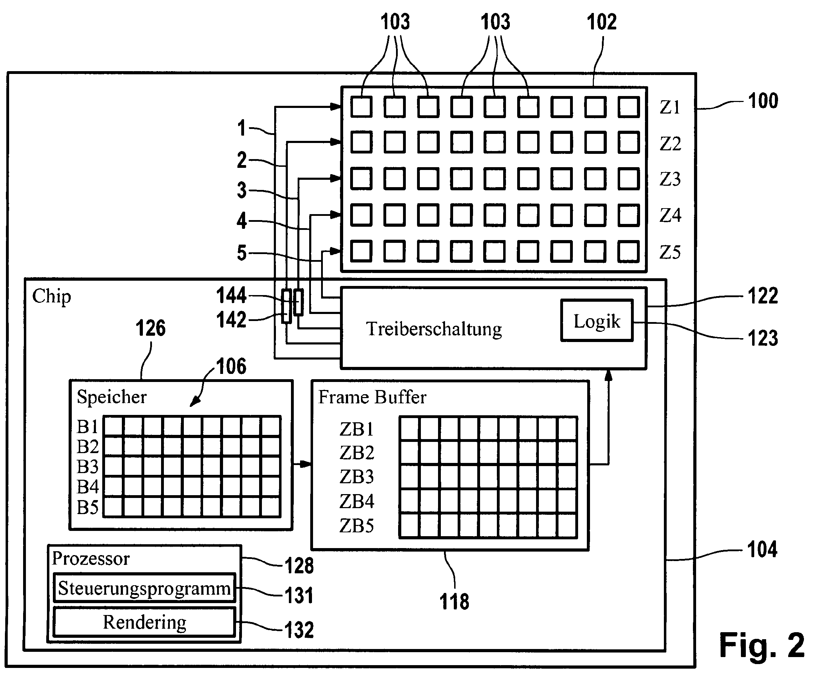

Die Figur 2 zeigt eine weitere Ausführungsform des Dokuments 100.

Die Anzeige 102 des Dokuments 100 beinhaltet mehrere Anzeigeelemente 103, die matrixförmig angeordnet sind. Die durch die räumliche Anordnung der Anzeigeelemente 103 gebildete Matrix hat eine Anzahl von n Zeilen Z1 bis Zn, wobei in der Ausführungsform der Figur 2 n = 5 ist. In anderen Ausführungsformen kann ein wesentlich größerer Wert von n gewählt werden.

Die elektronische Schaltung 104 des Dokuments 100 ist hier als Chip, insbesondere als RFID-Chip, ausgebildet. Die elektronische Schaltung 104 beinhaltet eine Treiberschaltung 122 zur Ansteuerung der Anzeige 102. Hierzu beinhaltet die Treiberschaltung 122 eine Treiberlogik 123.

Die Treiberschaltung 122 ist über Zeilenleitungen 1, 2, 3, 4 und 5 mit der Anzeige 102 verbunden, um jeweils eine der Zeilen der Anzeige 102 anzusteuern. Alternativ oder zusätzlich kann die Ansteuerung der Anzeigeelemente 103 über Spaltenleitungen erfolgen. Das Vorhandensein von Spaltenleitungen ist aber nicht zwingend erforderlich, insbesondere dann nicht, wenn die Zeilenleitungen 1, 2, 3, 4 und 5 als Datenbusse zur Ansteuerung aller Anzeigeelemente 103 der betreffenden Zeile ausgebildet sind.

Die elektronische Schaltung 104 hat ferner einen Prozessor 128 zur Ausführung von Programminstruktionen 131, die ein Steuerungsprogramm implementieren, sowie zur Ausführung von Programminstruktionen 132, die zur Decodierung der Daten 106 dienen. Diese Decodierung wird auch als "Rendering" bezeichnet. Beispielsweise liegen die Daten 106 in einem standardisierten Datenformat codiert vor, d.h. beispielsweise im Format JPEG, GIF oder TIFF. Durch die Programminstruktionen 131 können die Daten 106 decodiert werden.

Die elektronische Schaltung 104 hat ferner einen Pufferspeicher 118, beispielsweise einen sogenannten frame buffer.

In der Ausführungsform der Figur 2 ist die Treiberlogik 123 zur Ansteuerung der Anzeigeelemente in der Reihenfolge von deren räumlicher Anordnung ausgebildet, d.h. die Treiberlogik 123 ist so ausgebildet, dass innerhalb einer Bildwiederholperiode nacheinander die Anzeigeelemente der Zeilen Z1, Z2, Z3, Z4 und Z5 in dieser Reihenfolge angesteuert werden.

In dem Speicher 126 sind die Daten 106 gespeichert, welche die Bildzeilen B1, B2, B3, B4 und B5 aufweisen. Für eine Wiedergabe der Daten 106 auf der Anzeige 102 werden diese durch Ausführung der Programminstruktionen 132 decodiert und in den entsprechenden Zeilen ZB1, ZB2, ZB3, ZB4 und ZB5 des Pufferspeichers 118 gespeichert.

Die Treiberlogik 123 greift auf den Pufferspeicher 118 zu, um in der Reihenfolge von dessen Zeilen ZB1, ZB2, ZB3, ZB4 und ZB5 die entsprechenden Zeilen Z1, Z2, Z3, Z4 und Z5 der Anzeige 102 nacheinander innerhalb einer Bildwiederholperiode anzusteuern. Durch diese Ansteuerung geben die Anzeigeelemente 103 einer Zeile deren optische Signale ab, die zum Aufbau des Vollbilds zur Wiedergabe der Daten 106 erforderlich sind.

In der Ausführungsform der Figur 2 erfolgt die Verzögerung der optischen Signalausgabe der Anzeigeelemente der Teilmenge zeilenweise. Hierzu beinhalten beispielsweise die Zeilenleitungen 2 und 3 jeweils ein Verzögerungselement 142 bzw. 144. Die Anzeigeelemente der Zeile Z2 und Z3 bilden hier also die Teilmenge.

Beispielsweise können die Verzögerungen der Verzögerungselemente 142 und 144 fest vorgegeben sein. Insbesondere können die Verzögerungselemente 142, 144 durch eine geradzahlige Serienschaltung von Invertoren realisiert sein, wobei jeder der Invertoren zu der Verzögerung der Signalweiterleitung von der Treiberschaltung 122 an die betreffende Zeile der Anzeige 102 beiträgt. Die Verzögerung der Verzögerungselemente 142, 144 kann auch durch Anlegen einer Steuerspannung, die beispielsweise von der Treiberschaltung 122 generiert wird, veränderlich sein.

Alternativ wird die zeitliche Verzögerung der Abgabe der optischen Signale von den Anzeigeelementen der Teilmenge, d.h. hier der Anzeigeelemente der Zeilen Z2 und Z3, auf Ebene der Treiberlogik 123 implementiert. Die Treiberlogik 123 ist dazu so ausgebildet, dass die Ansteuerung der Zeilenleitungen 2 und 3 jeweils mit einer zeitlichen Verzögerung erfolgt.

Die über die zeitlichen Verzögerungen auszugebende Information kann veränderbar sein. In diesem Fall verändert die Treiberlogik 123 die Auswahl der Zeilen, die mit zeitlicher Verzögerung angesteuert werden, und/oder die Beträge der zeitlichen Verzögerung der Ansteuerung, um so die geänderte Information zu codieren.

Bei der Information, die von der Treiberlogik 123 über die Anzeige 102 durch Variation der zeitlichen Verzögerungen ausgegeben wird, kann es sich auch um einen Fahrzeugparameter und/oder einen Gebührenstatus handeln. Bei dieser Ausführungsform ist das Dokument 100 als elektronisches Kraftfahrzeug-Kennzeichen ausgebildet, welches an einem Kraftfahrzeug angebracht ist oder welches einen integralen Bestandteil des Kraftfahrzeugs bildet.

Beispielsweise kann die Treiberlogik 123 oder die elektronische Schaltung 104 eine Schnittstelle zu einem Kraftfahrzeug-Elektronikgerät aufweisen, welches die auszugebende Information an die Schnittstelle der elektronischen Schaltung 104 in regelmäßigen oder unregelmäßigen Zeitabständen sendet. Bei dem Kraftfahrzeug-Elektronikgerät kann es sich beispielsweise um eine sogenannte Electronic Control Unit (ECU) handeln. Das Kraftfahrzeug-Elektronikgerät kann über ein Kraftfahrzeug-Bussystem mit der elektronischen Schaltung 104 vernetzt sein, um über das Kraftfahrzeug-Bussystem die auszugebende Information zu übertragen. Die elektronische Schaltung 104 kann die über die Schnittstelle empfangene Information an die Treiberlogik intern weiterleiten, so dass diese die zeitlichen Verzögerungen der Ansteuerung der Anzeige entsprechend vornimmt.

Beispielsweise kann das Kraftfahrzeug-Elektronikgerät zur Erfassung eines Fahrzeug-Parameters dienen, und zwar auf der Basis von Sensorsignalen. Beispielsweise dient ein Sensor zur Erfassung eines aktuellen Abgaswerts des Kraftfahrzeugs. Dieser aktuelle Abgaswert wird in Form einer Information von dem Kraftfahrzeug-Elektronikgerät an die elektronische Schaltung 104 übertragen, sodass der Abgaswert über die Anzeige 102 ausgegeben wird. Entsprechend kann für weitere Fahrzeugparameter, wie zum Beispiel die Geschwindigkeit, den aktuell von dem Kraftfahrzeug erzeugten Lärmpegel oder andere Umwelt- und/oder sicherheitsrelevante Fahrzeugparameter verfahren werden.

Alternativ oder zusätzlich ist das Kraftfahrzeug-Elektronikgerät zur Bestimmung eines Gebührenstatus ausgebildet. Beispielsweise wird durch das Kraftfahrzeug-Elektronikgerät festgestellt, ob eine erforderliche Gebühr, wie zum Beispiel eine Mautgebühr, eine Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät an die elektronische Schaltung 104 ausgegeben, sodass diese Information über die Anzeige 102 ausgegeben wird.

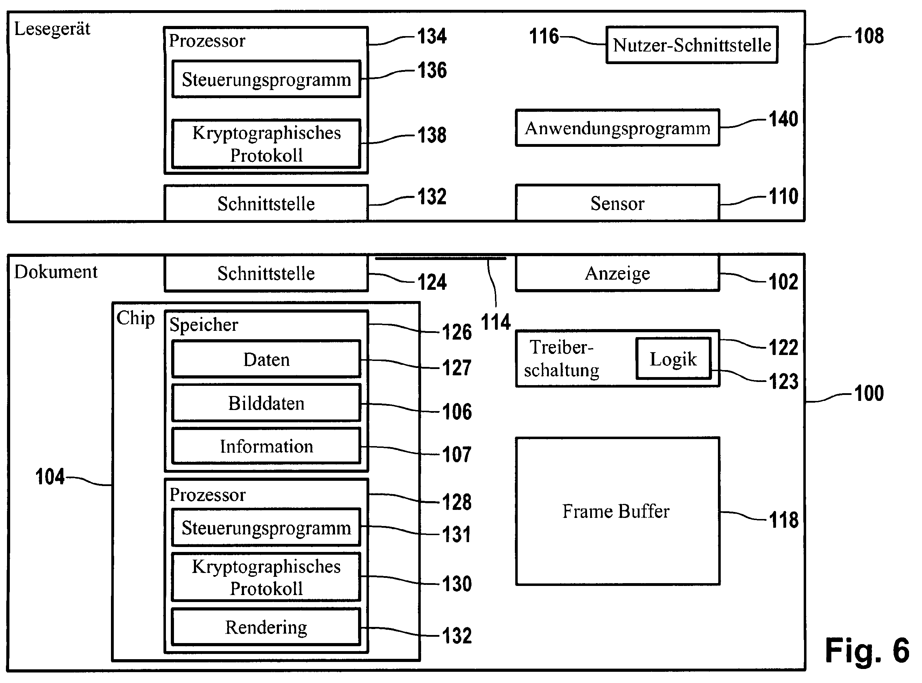

Dementsprechend kann das Lesegerät 108 (vgl. Figur 6) zur Erfassung der Information, die über die Anzeige 102 ausgegeben wird, von dem stehenden und/oder von dem fahrenden Kraftfahrzeug ausgebildet sein. Das Lesegerät 108 kann über ein Netzwerk mit einem zentralen Servercomputer verbunden sein, in dem die von der Anzeige 102 erfasste Information ausgewertet wird.

Bei den Daten 106 kann es sich hier um das amtliche Kraftfahrzeug-Kennzeichen handeln. Auf der Anzeige 102 wird also visuell sichtbar das amtliche Kraftfahrzeug-Kennzeichen ausgegeben sowie zusätzlich eine oder mehrere weitere Informationen, die visuell ohne ein Lesegerät nicht wahrnehmbar sind. Bei dieser Ausführungsform kann eine Aktualisierung des amtlichen Kennzeichens dadurch erfolgen, dass eine Aktualisierung der Daten 106 vorgenommen wird, beispielsweise indem Daten, die das aktualisierte amtliche Kennzeichen beinhalten, von dem Kraftfahrzeug-Elektronikgerät über das Kraftfahrzeug-Bussystem an die elektronische Schaltung 104 gesendet werden, welche die Daten 106 dann mit den empfangenen Daten überschreibt.

Die Anzeige 102 kann als so genannte Aktiv-Matrix ausgebildet sein. In diesem Fall ist jedem der Anzeigeelemente 103 eine so genannte Aktivierungsschaltung zugeordnet, die über je eine Zeilenleitung und eine Spaltenleitung von der Treiberschaltung 122 angesteuert werden kann. In diesem Fall kann die zeitliche Verzögerung auf der Ebene der Aktivierungsschaltungen der Anzeigeelemente der Teilmenge realisiert sein. Beispielsweise sind die Aktivierungsschaltungen der Anzeigeelemente der Teilmenge über Verzögerungselemente entsprechend den Verzögerungselementen 142, 144 mit den sie betreffenden Zeilenleitungen und Spaltenleitungen verbunden.

Alternativ ist es auch möglich, die zeitliche Verzögerung nicht auf der Ebene der Ansteuerung, sondern auf der Ebene der Anzeigeelemente 3 selbst zu implementieren. Jedes der Anzeigeelemente 103 hat eine Ansprechcharakteristik, d.h. eine Übertragungsfunktion, die den zeitlichen Verlauf der Abgabe eines optischen Signals bei Ansteuerung dieses Anzeigeelements 103 angibt. Die Anzeigeelemente 103 der Teilmenge sind so ausgebildet, dass sie ein Ansprechverhalten aufweisen, welches von dem Ansprechverhalten der übrigen Anzeigeelemente 103 der Anzeige 102 abweicht. Dieses Ansprechverhalten ist verzögert, wodurch sich die zeitliche Verzögerung der Abgabe der optischen Signale von diesen Anzeigeelementen 103 der Teilmenge ergibt.

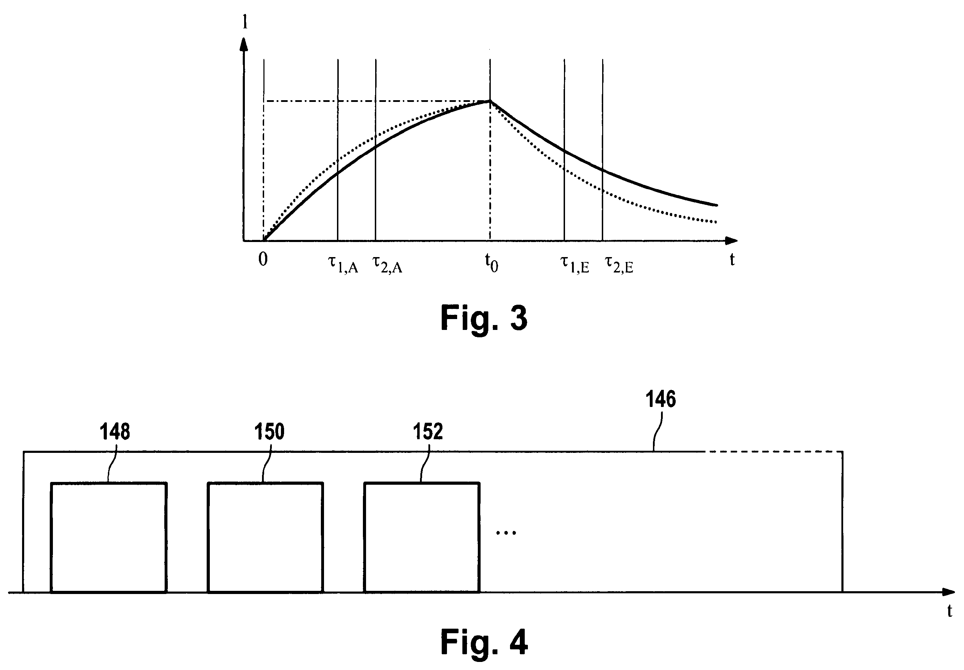

Ein solcher zeitlicher Verlauf des Ansprechverhaltens ist Beispielhaft in Figur 3 für drei verschiedene Sorten von Anzeigeelementen dargestellt. Eine erste Sorte (gestrichelte Linie) von Anzeigeelementen hat eine erste Halbwertzeit von $\tau_{1,A}$ für den Anstieg des Signals sowie einer Halbwertzeit von $\tau_{1,E}$ für den Abfall des Signals. Eine zweite Sorte (durchgezogene Linie) von Anzeigeelementen hat eine erste Halbwertzeit von $\tau_{2,A}$ für den Anstieg des Signals sowie einer Halbwertzeit von $\tau_{2,E}$ für den Abfall des Signals. Die zweite Sorte hat also im vergleich zu der ersten Sorte ein verzögertes Ein- und Ausschaltverhalten. Eine dritte Sorte (strichpunktierte Linie) von Anzeigelementen wird idealisiert mit einem sprunghaften Anschalt- und Ausschaltverhalten angenommen.

Die Fläche unter allen drei Kurven und somit die Zahl der emittierten und wahrgenommenen Photonen und somit der Helligkeitseindruck ist für alle drei Kurven identisch. Somit kann der Beobachter ohne technische Hilfsmittel die erste, zweite und dritte Sorte von Anzeigeelementen nicht unterscheiden.

Beispielsweise wird das verzögerte Ansprechverhalten der Anzeigeelemente 103 der Teilmenge dadurch erreicht, dass für diese Anzeigeelemente 103 ein anderer Leuchtstoff mit einer längeren Nachleuchtzeit als für die übrigen Anzeigeelemente 103, die nicht zu der Teilmenge gehören, verwendet wird. Ein solcher Leuchtstoff mit einer längeren Nachleuchtzeit hat ein entsprechend verzögertes Ansprechverhalten.

Alternativ wird derselbe Leuchtstoff für alle Anzeigeelemente 103 verwendet, wie zum Beispiel Europium, wobei das jeweilige Ansprechverhalten durch Verwendung unterschiedlicher Wirtskristalle variiert wird.

In erster Näherung kann für das Verhalten solcher Leuchtstoffe sowohl für den Einschalt- als auch für den Ausschaltvorgang ein monoexponentieller Verlauf angenommen werden. Eine Anpassung des gemessenen zeitaufgelösten Intensitätsprofils erfolgt dementsprechend nach den Formeln a und b.

$$\text{Formel [a]: Expotentielles Anwachsen } I = I_{\text{sättigung}} \cdot (1 - e^{-\tau/t})$$

$I$ = Lumineszenzintensität zum Zeitpunkt t

$I_{\text{Sättigung}}$ = Lumineszenzintensität bei Sättigung (Anregung und Emission im Gleichgewicht)

$\tau$ = Zeitkonstante

$t$ = Zeit

$$\text{Formel [b]: Expotentielles Abklingen } I = I_0 \cdot e^{-\tau \cdot t}$$

$I$ = Lumineszenzintensität zum Zeitpunkt t

$I_0$ = Lumineszenzintensität zum Zeitpunkt t = 0

$\tau$ = Zeitkonstante

t = Zeit

Für komplexere Systeme können Anpassungen mit multiexponentiellen Verläufen erfolgen. Diese sind dem Fachmann bekannt.

Die Variation der Lebensdauern kann über Verwendung verschiedener Materialien, zum Beispiel verschiedene Wirtsgittersysteme, räumliche Anordnung z.B. in Typ II Halbleitern oder bei intramolekularen Energietransfer (FRET, insbesondere spFRET) erfolgen. Weitere Variationsmöglichkeiten ergeben sich durch gezielte chemische Dotierungen von Polymeren mit Metallen.

Bei Verwendung von emissiven Anzeigevorrichtungen, insbesondere OLEDs, können verschiedene Emittermaterialien durchaus ein ähnliches oder sogar Identisches Emissionsspektrum aufweisen und sich trotzdem in ihrem zeitlichen Lumineszenzverhalten deutlich unterscheiden. Je nach Lebensdauer des angeregten Zustandes unterscheidet man zwischen Fluoreszenz und Phosphoreszenz. Fluoreszente Materialien haben Lebensdauern < $10^{-6}$ s und phosphoreszente Materialien von > $10^{-6}$ s.

Von den gängigen OLED Materialien besitzen insbesondere die sogenannten Triplett Materialien das Potential, gleichzeitig als Sicherheitsfeature eingesetzt zu werden. Diese Materialien zeichnen sich durch Ihre Phosphoreszenz aus. Sie unterscheidet sich im wesendlichen hinsichtlich der Fluoreszenz durch um Größenordnungen längere Lebensdauern des angeregten Zustandes. Während der Übergang des angeregten Zustandes zum Grundzustand in der Phosphoreszenz als verboten bezeichnet wird (der sogenannte Triplettzustand), ist er in der Fluoreszenz erlaubt (der Singulettzustand).

Aus dem Stand der Technik sind eine Vielzahl an sogenannten Triplett-OLED-Materialien bekannt. Insbesondere Derivate von Poly(p-Phenylen-Vinylen) (PPV) sind geeignet. Weitere Materieline sind z.B. Triphenylamin dimer, N,N'-bis(3 methylphenyl)-N,N'-bis(phenyl)-benzidine (TPD), fac tris(2-phenylpyridine) iridium (Ir(ppy)$_3$) doped TPD, and platinum octaethyl porphine (PtOEP) doped TPD (Tsuboi, Taiju; Murayama, Hideyuki; Penzkofer, Alfons (2006) Photoluminescence Characteristics of Ir(ppy)3 and PtOEP doped in TPD Host Material. Thin Solid Films, 499 (1-2). pp. 306-312. ISSN 0040-6090).

Die Abklingzeitkonstanten spielen im Stand der Technik bei OLEDs nur insofern eine Rolle, als das die Materialien für bestimmte Anwendungen (z.B. TV) nicht zu langsam abklingen sollen (Nachleuchten). Im Unterschied hierzu kann erfindungsgemäß über das Ankling- und Abklingverhalten eine Information und/oder ein Sicherheitsmerkmal kodiert werden.

Die Figur 4 zeigt ein Signaldiagramm zur Darstellung einer Bildwiederholperiode 146. Die Bildwiederholperiode 146 beinhaltet zeitlich äquidistante Zeilenansteuerungsperioden 148, 150, 152, ..., innerhalb der die Zeilen Z1, Z2, Z3, ... (vgl. Figur 2) nacheinander angesteuert werden.

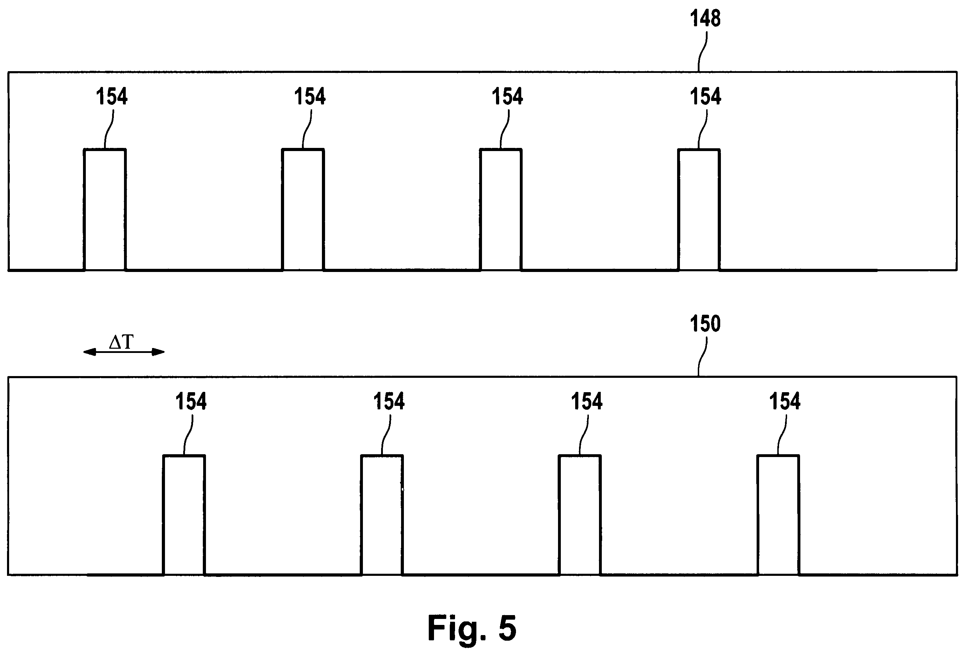

Die Figur 5 zeigt exemplarisch die Zeilenansteuerungsperiode 148 zur Ansteuerung der Zeile Z1 und die nachfolgende Zeilenansteuerungsperiode 150 zur Ansteuerung der Zeile Z2.

Innerhalb der Zeilenansteuerungsperiode 148 werden die Anzeigeelemente 103 der Zeile Z1 der Reihe nach mit den zeitlich äquidistanten Pixelsignalen 154 angesteuert. Hierdurch werden die von den Anzeigeelementen 103 jeweils abzugebenden Intensitäten der optischen Signale vorgegeben. Das Timing der Zeilenansteuerungsperioden 148, 150, 152, ... und der Pixelsignale 154 innerhalb der Bildwiederholperiode 146 ist dabei fest vordefiniert.

Abweichend von diesem fest vorgegebenen Timing der Ansteuerung der Anzeigeelemente 103 erfolgt die Ansteuerung der Anzeigeelemente 103 der Zeile Z2, welche zu der Teilmenge gehören, mit einer zeitlichen Verzögerung ΔT, wie in der Figur 5 dargestellt. Diese zeitliche Verzögerung ΔT ist Ergebnis der verzögerten Weiterleitung des Ansteuerungssignals, welches zur Ansteuerung der Zeile Z2 von der Treiberschaltung 122 über die Zeilenleitung 2 zu der Zeile Z2 übertragen wird, da sich ja in der Zeilenleitung 2 das Verzögerungselement 142 befindet. Alternativ kann die Verzögerung ΔT auch durch eine entsprechend verzögerte Signalgenerierung des Ansteuerungssignals durch die Treiberlogik 123 erfolgen.

Die Figur 6 zeigt eine weitere Ausführungsform eines erfindungsgemäßen Dokuments 100 und eines erfindungsgemäßen Lesegeräts 108.

Die elektronische Schaltung 104 des Dokuments 100 ist hier als Chip, insbesondere als RFID-Chip, ausgebildet. Die elektronische Schaltung 104 ist mit einer Schnittstelle 124 des Dokuments 100 zur Kommunikation mit dem Lesegerät 108 verbunden. Die Schnittstelle 124 kann beispielsweise ein oder mehrere Antennenwindungen, die in einem Randbereich des Dokuments 100 verlaufen, aufweisen.

Die Schaltung 104 hat einen elektronischen Speicher 126 zur Speicherung von schutzbedürftigen Daten 127. Bei den schutzbedürftigen Daten 127 kann es sich beispielsweise um biometrische Daten des Trägers des Dokuments 100, wie zum Beispiel Fingerabdruckdaten, Iris-Scandaten oder dergleichen handeln. Die schutzbedürftigen Daten 127 sind in einem besonders geschützten Speicherbereich des Speichers 126 gespeichert.

Ferner sind in demselben Speicher 126 oder einem anderen elektronischen Speicher des Dokuments 100 die Daten 106 und die Information 107 gespeichert. Die Schaltung 104 hat ferner einen Prozessor 128 zur Ausführung von Programminstruktionen 130, durch die die das Dokument 100 betreffenden Schritte eines kryptographischen Protokolls implementiert werden. Der Prozessor 128 dient ferner zur Ausführung von Programminstruktionen 131, die ein Steuerungsprogramm implementieren.

Das Lesegerät 108 hat einen optischen Sensor 110 zur Erfassung der von den Anzeigeelementen 103 (vgl. Fig.2) der Anzeige 102 abgestrahlten optischen Signale. Bei dem optischen Sensor 110 kann es sich um einen CCD-Sensor oder einen Scanner handeln.

Das Lesegerät 108 hat ferner eine Schnittstelle 132, die der Schnittstelle 124 des Dokuments 100 entspricht. Beispielsweise ist also die Schnittstelle 132 für eine RFID-Kommunikation mit dem Dokument 100 bzw. dessen Schaltung 104 ausgebildet. Die Schnittstellen 124, 132 können kontaktbehaftet, kontaktlos oder als so genanntes Dual-Mode-Interface ausgebildet sein. Die Schnittstellen 124, 132 können auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Das Dokument 108 hat zumindest einen Prozessor 134 zur Ausführung eines Steuerungsprogramms 136 sowie von Programminstruktionen 138, durch die die das Lesegerät 108 betreffenden Schritte des kryptographischen Protokolls implementiert werden. Das Lesegerät 108 kann ferner zur Ausführung eines Anwendungsprogramms 140 dienen. Das Anwendungsprogramm 140 kann auch von einem anderen Computersystem ausgeführt werden, welches mit dem Lesegerät 108 verbunden ist.

Das durch die Programminstruktionen 131 implementierte Steuerungsprogramm des Dokuments 100 ist so ausgebildet, dass es die Treiberschaltung 122 zur Wiedergabe der Daten 106 ansteuert. Die Treiberschaltung greift dabei auf die Information 107 zu, um die Verzögerungen der Ansteuerung der Anzeigeelemente der Teilmenge dementsprechend zu codieren. Alternativ kann auch die Verzögerung fest vorgegeben sein, wobei dann die Kodierung der Information über die Auswahl der Anzeigeelemente erfolgt, die innerhalb einer Bildwiderholperiode verzögert angesteuert werden.

Zum Zugriff auf die Daten 127 des Speichers 126 erfasst das Lesegerät 108 zunächst mittels seines optischen Sensors 110 die Anzeige 102. Hierzu wird der Sensor 110 entsprechend von dem Steuerungsprogramm 136 angesteuert. Das Steuerungsprogramm 136 decodiert die in der Verzögerung und/oder der Anordnung der Anzeigeelemente 103 der Teilmenge codierte Information, um so die Information zu empfangen. Auf diese Art und Weise erhält das Steuerungsprogramm 136 Kenntnis des kryptographischen Schlüssels.

Nach der Erfassung des kryptographischen Schlüssels startet das Steuerungsprogramm 136 die Ausführung der Programminstruktionen 138, so dass das kryptographische Protokoll zwischen dem Lesegerät 108 und dem Dokument 100 mit Hilfe des kryptographischen Schlüssels durchgeführt wird. Beispielsweise handelt es sich bei dem kryptographischen Protokoll um ein Challenge-Response-Verfahren.

Das Challenge-Response-Verfahren kann beispielsweise so ablaufen, dass das Lesegerät 108 zunächst eine Anforderung der Daten 127 an die Schnittstelle 124 des Dokuments 100 sendet. Daraufhin wird die Ausführung der Programminstruktionen 130 gestartet. Hierdurch wird seitens des Dokuments 100 z. B. eine Zufallszahl generiert, die mit einem Referenzwert des kryptographischen Schlüssels symmetrisch verschlüsselt wird, so dass ein Chiffrat resultiert. Die verschlüsselte Zufallszahl, d.h. das Chiffrat, wird von der Schnittstelle 124 des Dokuments 100 an die Schnittstelle 132 des Lesegeräts 108 gesendet.

Durch Ausführung der Programminstruktionen 138 wird seitens des Lesegeräts 108 das von dem Dokument 100 empfangene Chiffrat mit Hilfe des zuvor empfangenen kryptographischen Schlüssels entschlüsselt. Das Resultat der Entschlüsselung wird von der Schnittstelle 132 an die Schnittstelle 124 des Dokuments 100 gesendet.

Mit Hilfe der Programminstruktionen 130 wird dann seitens des Dokuments 100 geprüft, ob das Ergebnis der Entschlüsselung des Chiffrats, welche das Dokument von dem Lesegerät 108 empfangen hat, identisch ist mit der initial durch das Dokument 100 erzeugten Zufallszahl. Wenn dies der Fall ist, stimmt der Referenzwert des kryptographischen Schlüssels, der in den Programminstruktionen 130 beinhaltet ist, oder auf den diese zugreifen können, mit dem aus der Bildwiedergabe der Anzeige 102 durch das Lesegerät 108 erfassten kryptographischen Schlüssel überein, wodurch die Authentizität des Dokuments 100 und die Zugriffsberechtigung des Lesegeräts 108 gegeben ist.

Das Dokument 100 überträgt daraufhin die von dem Lesegerät 108 angeforderten Daten 127 des Speichers 126 von der Schnittstelle 124 zu der Schnittstelle 132. Diese Daten können von dem Steuerungsprogramm 136 an das Anwendungsprogramm 140 für eine Weiterverarbeitung übertragen werden. Beispielsweise werden die Daten auf einer Bildschirmmaske ausgegeben.

Bevor die Daten aus dem Speicher 126 an das Lesegerät 108 übertragen werden, können weitere Überprüfungen erforderlich sein, wie z.B. nach einem EAC Verfahren. Alternativ oder zusätzlich kann auch ein kryptographisches Protokoll basierend auf einem asymmetrischen Schlüssel zum Einsatz kommen.

**Bezugszeichenliste**

| 1 | Zeilenleitung |
|---|---|
| 2 | Zeilenleitung |
| 3 | Zeilenleitung |
| 4 | Zeilenleitung |
| 5 | Zeilenleitung |
| 100 | Dokument |
| 102 | Anzeige |
| 103 | Anzeigeelement |
| 106 | Daten |
| 107 | Informationen |
| 108 | Lesegerät |
| 110 | Sensor |
| 112 | Schaltung |
| 114 | Aufdruck |
| 116 | Nutzerschnittstelle |
| 118 | Pufferspeicher |
| 122 | Treiberschaltung |
| 123 | Treiberlogik |
| 124 | Schnittstelle |
| 126 | Speicher |
| 127 | Daten |
| 130 | Programminstruktionen |
| 131 | Programminstruktionen |
| 132 | Programminstruktionen |
| 134 | Prozessor |
| 136 | Steuerungsprogramm |
| 138 | Programminstruktionen |
| 140 | Anwendungsprogramm |
| 142 | Verzögerungselement |
| 144 | Verzögerungselement |
| 146 | Bildwiederholperiode |
| 148 | Zeilenansteuerungsperiode |
| 150 | Zeilenansteuerungsperiode |
| 152 | Zeilenansteuerungsperiode |
| 154 | Pixelsignal |

**Patentansprüche**

1. Dokument mit einer integrierten Anzeigevorrichtung (102), die mehrere ansteuerbare Anzeigeelemente (103) aufweist, wobei jedes der Anzeigeelemente zur Abgabe eines optischen Signals für eine Wiedergabe von in dem Dokument gespeicherten ersten Daten (106) ausgebildet ist, wobei die Anzeigevorrichtung zur zyklischen Ansteuerung der Anzeigeelemente zur Wiedergabe der ersten Daten in aufeinander folgenden Bildwiederholperioden ausgebildet ist, und wobei die Anzeigevorrichtung so ausgebildet ist, dass die Abgabe der optischen Signale zumindest einer Teilmenge der Anzeigeelemente mit einer zeitlichen Verzögerung erfolgt, wobei die zeitliche Verzögerung visuell nicht wahrnehmbar ist, wobei in der Länge der zeitlichen Verzögerung eine Information codiert ist, wobei die Anzeigeelemente der Teilmenge eine Ansprechcharakteristik haben, die sich von der Ansprechcharakteristik der übrigen Anzeigeelemente unterscheidet, was zu der Verzögerung führt, und wobei die Anzeigeelemente einen Leuchtstoff zur Erzeugung des optischen Signals aufweisen, **dadurch gekennzeichnet, dass** die Anzeigeelemente der Teilmenge einen ersten Wirtskristall für den Leuchtstoff aufweisen und wobei die übrigen Anzeigeelemente, die nicht zu der Teilmenge gehören, einen zweiten Wirtskristall zur Aufnahme des Leuchtstoffs aufweisen, wobei die ersten und zweiten Wirtskristalle unterschiedlich sind.

2. Dokument nach Anspruch 1, wobei in der Anordnung der Anzeigeelemente der Teilmenge eine Information codiert ist.

3. Dokument nach Anspruch 1 oder 2, mit Mitteln (123; 142, 144) zur Verzögerung der Ansteuerung der zu der Teilmenge gehörenden Anzeigeelemente.

**4.** Dokument nach einem der vorhergehenden Ansprüche, wobei die Anzeigeelemente in einer Aktiv-Matrix angeordnet sind, wobei jedem der Anzeigeelemente eine Aktivierungsschaltung zugeordnet ist, und wobei die Aktivierungsschaltungen der zu der Teilmenge gehörenden Anzeigeelemente Mittel zur Verzögerung der Ansteuerung beinhalten.

**5.** Dokument nach einem der vorhergehenden Ansprüche, wobei die Anzeigevorrichtung einen Bereich aufweist, in dem keine Anzeigeelemente der Teilmenge angeordnet sind.

**6.** Dokument nach einem der vorhergehenden Ansprüche, wobei es sich bei der Information um eine Personalisierungsinformation, ein Sicherheitsmerkmal oder einen kryptographischen Schlüssel handelt.

**7.** Dokument nach einem der vorhergehenden Ansprüche, wobei durch die zeitliche Verzögerung eine Information ausgegeben wird, wobei die Information zeitlich veränderlich ist, und mit Mitteln (123) zur Variation der zeitlichen Verzögerung zur Ausgabe der zeitlich veränderlichen Information.

**8.** Dokument nach einem der vorhergehenden Ansprüche, wobei es sich um ein elektronisches Kraftfahrzeugkennzeichen handelt.

**9.** Dokument nach einem der vorhergehenden Ansprüche, wobei es sich bei den ersten Daten (106) um ein Kennzeichen eines Fahrzeugs handelt und wobei durch die zeitliche Verzögerung eine Information ausgegeben wird, wobei es sich bei der Information um einen Fahrzeugparameter und/oder einen Gebührenstatus handelt.

**10.** Verfahren zur Verifikation eines Dokuments nach einem der Ansprüche 1 bis 9, mit folgenden Schritten:

- Erfassung der zeitlichen Verzögerungen der Abgabe der optischen Signale von den Anzeigeelementen der Teilmenge in einer Bildwiederholperiode,
- Überprüfung einer Referenz-Information mit Hilfe der zeitlichen Verzögerung.

## Claims

**1.** A document comprising an integrated display device (102) which comprises several activatable display elements (103), wherein each of the display elements is designed to emit an optical signal for a rendering of first data (106) stored in the document, wherein the display device is designed for cyclical activation of the display elements for rendering the first data in sequential image regeneration periods, and wherein the display device is designed in such a way that the emission of the optical signals of at least a subset of the display elements takes place with a chronological delay, wherein it is not possible to visually perceive the chronological delay, wherein information is coded in the length of the chronological delay, wherein the display elements of the subset have a response characteristic which differs from the response characteristic of the remaining display elements and which leads to the delay, and wherein the display elements comprise a luminescent substance for generating the optical signal, **characterised in that** the display elements of the subset have a first host crystal for the luminescent substance, and wherein the remaining display elements that do not belong to the subset have a second host crystal for receiving the luminescent substance, wherein the first and second host crystals are different.

**2.** The document according to claim 1, wherein information is coded in the arrangement of the display elements in the subset.

**3.** The document according to claim 1 or 2, comprising means (123; 142, 144) for delaying the activation of the display elements belonging to the subset.

**4.** The document according to any one of the preceding claims, wherein the display elements are arranged in an active matrix, wherein each of the display elements has an associated activation circuit, and wherein the activation circuits of the display elements that belong to the subset include means for delaying the activation.

**5.** The document according to any one of the preceding claims, wherein the display device has a region in which no display elements of the subset are arranged.

**6.** The document according to any one of the preceding claims, wherein the information is personalisation information, a security feature, or a cryptographic key.

**7.** The document according to any one of the preceding claims, wherein, as a result of the chronological delay, information is displayed, wherein the information is changeable chronologically, and with means (123) to vary the chronological delay for displaying the chronologically changeable information.

**8.** The document according to any one of the preceding claims, wherein said document is an electronic vehicle registration.

**9.** The document according to any one of the preceding claims, wherein the first data (106) are an identification of a vehicle, and wherein, as a result of the chronological delay, information is displayed, wherein this information is a vehicle parameter and/or a fee status.

**10.** A method for verifying a document according to any one of claims 1 to 9, comprising the following steps:

- capturing the chronological delays of the emission of the optical signals by the display elements of the subset in an image regeneration period,
- reviewing reference information with the help of the chronological delay.

**Revendications**

**1.** Document avec un dispositif d'affichage (102) intégré qui présente plusieurs éléments d'affichage (103) pouvant être commandés, où chacun des éléments d'affichage est conçu pour la délivrance d'un signal optique pour une restitution de premières données (106) mémorisées dans le document, où le dispositif d'affichage est conçu pour le démarrage par cycles des éléments d'affichage pour la restitution des premières données dans des périodes de renouvellement d'image se succédant, et où le dispositif d'affichage est conçu de manière à ce que la délivrance des signaux optiques est effectuée pour au moins une quantité partielle des éléments d'affichage avec un décalage dans le temps, où la durée du décalage dans le temps ne peut pas être perçue visuellement, où une information est codée pendant la durée du décalage dans le temps, où les éléments d'affichage de la quantité partielle ont une caractéristique de contact qui se différencie des caractéristiques de contact des autres éléments d'affichage, ce qui provoque le décalage, et où les éléments d'affichage présentent une substance luminescente pour la création du signal optique, **caractérisé en ce que** les éléments d'affichage des quantités partielles présentent un premier cristal hôte pour la substance luminescente, et où les autres éléments d'affichage qui ne font pas partie de la quantité partielle présentent un deuxième cristal hôte pour la réception de la substance luminescente, où les premier et deuxième cristaux hôtes sont différents.

**2.** Document selon la revendication 1, où une information est codée dans l'agencement des éléments d'affichage de la quantité partielle.

**3.** Document selon la revendication 1, ou 2, avec des moyens (123 ; 142, 144) pour décaler le démarrage des éléments d'affichage faisant partie de la quantité partielle.

**4.** Document selon l'une des revendications précédentes, où les éléments d'affichage sont disposés dans une matrice active, où chacun des éléments d'affichage est associé à un circuit d'activation, et où les circuits d'activation contiennent des moyens pour décaler le démarrage des éléments d'affichage correspondant à la quantité partielle.

**5.** Document selon l'une des revendications précédentes, où le dispositif d'affichage présente un domaine dans lequel il n'y a aucun élément d'affichage de la quantité partielle.

**6.** Document selon l'une des revendications précédentes, où, dans le cas de l'information, il s'agit d'une information de personnalisation, une caractéristique de sécurité ou une clé cryptographique.

**7.** Document selon l'une des revendications précédentes, où, par le décalage dans le temps, une information est délivrée, où l'information est variable dans le temps, et avec des moyens (123) pour la variation du décalage dans le temps de la délivrance de l'information variable dans le temps.

**8.** Document selon l'une des revendications précédentes, où il s'agit d'une caractéristique de véhicule électronique.

9. Document selon l'une des revendications précédentes, où, dans le cas des premières données (106), il s'agit d'une immatriculation d'un véhicule et où une information est délivrée par le décalage dans le temps, où il s'agit dans le cas de l'information d'un paramètre de véhicule et/ou d'un état de frais.

10. Procédé de vérification d'un document selon l'une des revendications 1 à 9, avec les étapes suivantes :

- détermination des décalages dans le temps de la délivrance des signaux optiques par des éléments d'affichage de la quantité partielle dans une période de renouvellement d'image,
- contrôle d'une information de référence avec l'aide du décalage dans le temps.

| | |
|---|---|
| Nutzer-Schnittstelle | Elektronische Schaltung |
| **116** | Sensor |

108

112

110

114

| | |
|---|---|
| | Anzeige |
| **126** | |
| **106** | Bilddaten |

102

100

Elektronische Schaltung

104

**Fig. 1**

EP 2 220 643 B1

Fig. 2

EP 2 220 643 B1

Fig. 3

Fig. 4

**Fig. 5**

EP 2 220 643 B1

**Fig. 6**

Lesegerät 108

Prozessor 134
Steuerungsprogramm 136
Kryptographisches Protokoll 138

Schnittstelle 132

Nutzer-Schnittstelle 116

Anwendungsprogramm 140

Sensor 110

Dokument 100

Anzeige 102

Treiber-schaltung 122
Logik 123

Frame Buffer 118

114

Schnittstelle 124

Chip 104

Speicher 126
Daten 127
Bilddaten 106
Information 107

Prozessor 128
Steuerungsprogramm 131
Kryptographisches Protokoll 130
Rendering 132

**EP 2 220 643 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005025806
- DE 20100158 U1
- DE 102004008841 A1
- DE 102005030626 A1
- DE 102005030627 A1
- DE 102005030628 A1
- WO 2004080100 A1
- EP 1023692 B1
- DE 10215398 B4
- EP 1173825 B1
- EP 1230617 B1
- EP 1303835 B1
- EP 1537528 B1
- WO 03030096 A1
- EP 0920675 B1
- US 6019284 A
- US 6402039 B1
- WO 9938117 A
- DE 102006031422053
- WO 2007137555 A2
- US 5657008 A
- US 20070285361 A1
- WO 9908910 A1
- US 2003231150 A1
- EP 1094435 A1
- US 20060250535 A1
- WO 2007054944 A

**In der Beschreibung aufgeführte Nicht-Patentliteratur**

- **TSUBOI, TAIJU ; MURAYAMA, HIDEYUKI ; PEN-ZKOFER, ALFONS.** Photoluminescence Characteristics of Ir(ppy)3 and PtOEP doped in TPD Host Material. *Thin Solid Films,* 2006, vol. 499 (1-2), ISSN 0040-6090, 306-312